# EUROPÄISCHE PATENTSCHRIFT

(11) **EP 0 737 822 B1**
(45) Veröffentlichungstag und Bekanntmachung des Hinweises auf die Patenterteilung: **09.02.2000**
(21) Anmeldenummer: 96105696.7
(22) Anmeldetag: 11.04.1996
(51) Int. Cl.: F16D 3/18, F16D 3/84

(54) **Gelenk-Zahnkupplung**
Articulated toothed coupling
Accouplement à dents articulé

(30) Priorität: 15.04.1995 DE 29506461 U
(43) Veröffentlichungstag der Anmeldung: 16.10.1996
(73) Patentinhaber: RENK AKTIENGESELLSCHAFT, 86159 Augsburg (DE)
(72) Erfinder: Wewer, Ewald, 48485 Neuenkirchen (DE)
(74) Vertreter: Schober, Stefan, Dipl.-Ing.

(56) Entgegenhaltungen:
- DE-A- 2 039 524
- DE-A- 2 362 426
- DE-B- 1 020 838
- DE-C- 349 715
- DE-U- 9 309 829
- DE-U- 29 506 461
- US-A- 3 368 369
- US-A- 3 712 080

## Beschreibung

Die Erfindung betrifft eine Zahngelenkkupplung, insbesondere eine Doppelgelenk-Zahnkupplung gemäß dem Oberbegriff von Anspruch 1.

Doppelgelenk-Zahnkupplungen sind aus der DE-Auslegeschrift 1 020 838 und der US-A-3 712 080 bekannt. Die bekannten Doppelgelenk-Zahnkupplungen haben ein Gehäuse und zwei in ihm angeordnete Naben. Die Naben haben an ihrer äußeren Umfangsfläche eine Außenverzahnung und das Gehäuse hat an seiner inneren Umfangsfläche zwei Innenverzahnungen. Die Außenverzahnungen der Kupplungsnaben sind je mit einer der Innenverzahnungen des Gehäuses in Eingriff, so daß die miteinander in Eingriff stehenden Verzahnungen sich zusammen um eine Nabenachse drehen können. Die Zähne der Innenverzahnung erstrecken sich geradlinig parallel zur Nabenachse. Die Zähne der Außenverzahnung haben, im Naben-Axialschnitt gesehen, einen in Zahnlängsrichtung bogenförmig sich erstreckenden Zahnrücken. Kupplungen mit bogenförmigen Verzahnungen dieser Art sind unter dem registrierten Warenzeichen "Bogenzahn-Kupplung" bekannt. Die bogenförmigen Zähne der Außenverzahnung sind innerhalb der Zahnlücken der geraden Innenverzahnung axial und winkelig bewegbar, so daß die Naben relativ zum Gehäuse axiale und winkelige Bewegungen, und die beiden Naben relativ zueinander radiale Bewegungen machen können. Dadurch können mit den Naben verbundene Wellenenden relativ zueinander Axial-, Radial- und Winkelbewegungen machen. Die Zahnkupplungen enthalten ein Schmiermittel, beispielsweise Schmierflüssigkeit, Fett oder cremeförmige Schmiermittel, welche zumindest bei Betriebstemperaturen der Zahnkupplungen so fließfähig sind, daß Dichtungen zwischen dem Gehäuse und der Nabe oder zwischen dem Gehäuse und einer mit der Nabe verbundenen Welle oder balligartig gewellte Kappen oder Manschetten verwendet werden müssen. Alle diese Mittel haben den Nachteil, daß sie nach sehr kurzer Betriebszeit undicht werden, überwacht, gewartet und häufig ausgetauscht werden müssen. Während der Rotation der Zahnkupplung wird das Schmiermittel durch Fliehkraft radial nach außen gedrängt und bildet im Bereich der Kupplungsverzahnungen einen Schmiermittelring, in welchem die Kupplungsverzahnungen liegen, so daß sie geschmiert werden. Die Dichtungen liegen beim Stand der Technik auf einem kleineren Radius als die Kupplungsverzahnungen, damit das Schmiermittel während der Kupplungsrotation nicht durch Fliehkraft in und durch die Dichtungen gedrückt wird. Bei sehr niedriger Drehzahl der Kupplungen und beim Kupplungsstillstand strömt das Schmiermittel durch Gravitation in tiefer gelegene Kupplungsräume und dabei zumindest teilweise auch an den Dichtungsspalt der Dichtungen. Dadurch besteht beim erneuten Rotieren der Zahnkupplung die Gefahr, daß Schmiermittel in und durch die Dichtungsspalte aus der Kupplung hinausgetrieben wird. Kupplungen können in horizontaler, vertikaler oder schräger Lage benutzt werden und während der Benutzung ihre Lage verändern. Dies verschlimmert die Dichtungsprobleme. Bei modernen Maschinen sollen mit Zahnkupplungen hohe Drehmomente bei sehr hohen Drehzahlen übertragen werden. Die Übertragung der hohen Leistung erfordert eigentlich eine große Zahngelenkkupplung, jedoch ist häufig der für eine Zahnkupplung zur Verfügung stehende Einbauraum zwischen beispielsweise einem Motor und einem Getriebe einer Eisenbahn-Lokomotive so klein, daß eine große Zahnkupplung nicht untergebracht werden kann.

Durch die Erfindung soll die Aufgabe gelöst werden, eine Zahngelenkkupplung, insbesondere eine Doppelgelenk-Zahnkupplung so auszubilden, daß kein Schmiermittel aus ihr ausdringen kann, wobei die Kupplung gleichzeitig eine kleine Baugröße haben soll und bezüglich ihrer Dichtungsmittel für das Schmiermittel weitgehend verschleißfrei und weitgehend wartungsfrei sein soll.

Diese Aufgabe wird gemäß der Erfindung durch die kennzeichnenden Merkmale von Anspruch 1 gelöst.

Weitere Merkmale der Erfindung sind in den Unteransprüchen enthalten.

Die Erfindung wird im folgenden anhand einer bevorzugten Ausführungsform als Beispiel mit Bezug auf die Zeichnungen näher beschrieben. Sie zeigen in
- Fig. 1: einen Längsschnitt durch eine bevorzugte Ausführungsform einer Doppelgelenk-Zahnkupplung gemäß der Erfindung, welche zwei Kupplungsnaben enthält;
- Fig. 2: einen Längsschnitt durch die bevorzugte Ausführungsform in einer Position, in welcher der Abstand der beiden Kupplungsnaben zueinander verringert ist und sie einen radialen Versatz zueinander aufweisen;
- Fig. 3: einen Längsschnitt durch die bevorzugte Ausführungsform in einer Position, in welcher der Abstand der beiden Kupplungsnaben zueinander vergrößert ist und sie einen radialen Versatz zueinander aufweisen.

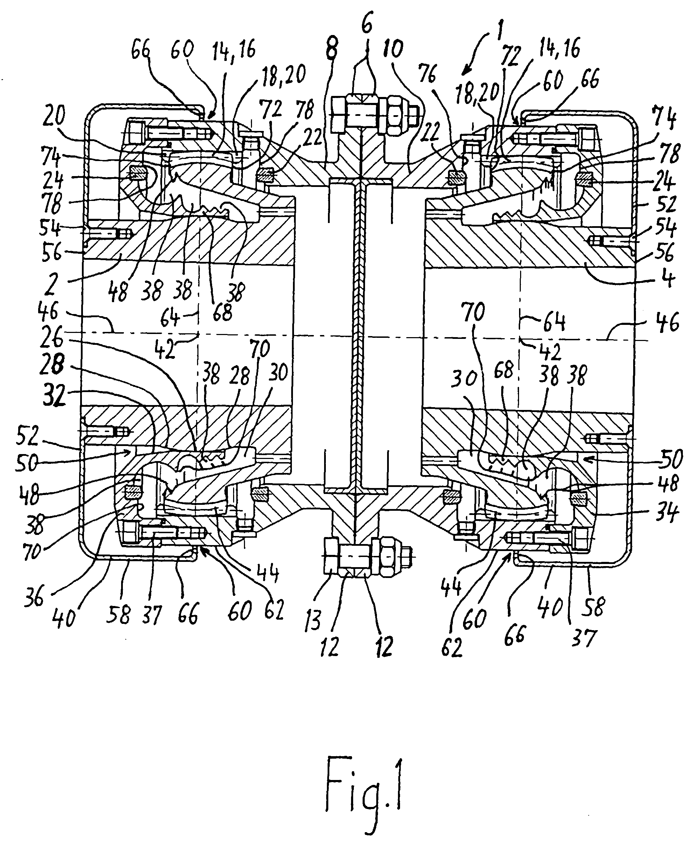

Die Doppelgelenk-Zahnkupplung 1 von Fig. 1 kann z.B. für ein Schienenfahrzeug verwendet werden zur Drehmomentübertragung zwischen der Ausgangswelle (nicht dargestellt) eines Motors und der Eingangswelle (nicht dargestellt) eines Getriebes. Die Ausgangswelle des Motors ist mit einer linken Kupplungsnabe 2 und die Eingangswelle des Getriebes ist mit einer rechten Kupplungsnabe 4 verbunden. Die beiden Kupplungsnaben 2,4 sind innerhalb eines Kupplungsgehäuses 6 der Doppelgelenk-Zahnkupplung 1 angeordnet. Das Kupplungsgehäuse 6 ist in Längsrichtung in zwei symmetrische Gehäusehälften, eine linke Gehäusehälfte 8 und eine rechte Gehäusehalfte 10 geteilt. Jede der beiden Gehäusehälften 8, 10 hat an ihrem axial inneren Ende einen Verbindungsflansch 12, welche durch Schrauben 13 verbunden sind.

Die rechte Kupplungsnabe 4 ragt in axialer Richtung soweit in die rechte Gehäusehälfte 10 und die linke Kupplungsnabe 2 soweit in die linke Gehäusehälfte 8, daß zwischen den stirnseitigen Enden der Kupplungsnaben 2,4 ein axialer Abstand vorhanden ist. Die beiden Kupplungsnaben 2,4 haben an ihren äußeren Umfangsflächen jeweils eine ringförmige Außenverzahnung 14 mit Kupplungszähnen 16, deren Zahnrücken in Zahnlängsrichtung bogenförmig ist, während die zugehörigen Gehäusehälften 8,10 an ihren inneren Umfangsflächen jeweils eine ringförmige Innenverzahnung 18 mit geraden Zähnen 20 aufweisen. Eine Drehmomentübertragung zwischen den Kupplungsnaben 2,4 und dem Kupplungsgehäuse 6 kommt durch Anliegen der Flanken der Kupplungszähne 16 der Kupplungsnaben 2,4 an den Gegenflanken der geraden Zähne 20 des Kupplungsgehäuses 6 zustande. Bei winkeligen und/oder radialen und/oder axialen Verlagerungen der Ausgangswelle des Motors zusammen mit der einen Kupplungsnabe 2 relativ zu der Eingangswelle des Getriebes und damit auch relativ zur anderen Kupplungsnabe 4 gleiten und wälzen die bogenförmigen Kupplungszähne 16 der Kupplungsnaben 2,4 in axialer Richtung entlang der geraden Zähne 20 des Kupplungsgehäuses 6, wodurch die Doppelgelenk-Zahnkupplung 1 die Verlagerungen ausgleichen kann.

Im Inneren des Kupplungsgehäuses 6 sind rechts und links der bogenförmigen Kupplungszähne 16 in axialer Richtung wirkende innere Anschläge 22 und äußere Anschläge 24 an einem gehäusefesten Teil (Deckel 34 und 36) vorgesehen, welche den radialen und/oder den axialen Versatz der Kupplungsnaben 2,4 begrenzen. Die Baulänge der Doppelgelenk-Zahnkupplung 1 kann durch die Anordnung der Anschläge 22,24 um den halben Betrag der vom Schienenfahrzeug vorgegebenen Axialbewegung reduziert werden, was bei einem federgeführten Kupplungsgehäuse nicht gegeben ist. Mit anderen Worten: Dadurch, daß für jede Kupplungsnabe 2 und 4 sowohl ein axial wirkender innerer Anschlag 22 als auch ein entgegengesetzt axial wirkender äußerer Anschlag 24 vorgesehen ist, wird die axiale Strecke halbiert, um welche die beiden Kupplungsnaben 2 und 4, ausgehend von den axialen Mittelpositionen von Fig. 1, auseinander bewegt werden können, im Vergleich zu einer Ausführungsform, welche nur die inneren Anschläge 22 oder nur die äußeren Anschläge 24 oder nur für eine Kupplungsnabe innere und äußere Anschläge 22 und 24 hat. Dadurch wird die maximale Baulänge der Doppelgelenk-Zahnkupplung 1 um die genannte halbe Strecke kürzer. Die Anschläge 22, 24 bestehen vorzugsweise aus einem dämpfenden Material oder in sich federelastischem Material.

Zwischen jeder Gehäusehälfte 8,10 und jeder zugehörigen Kupplungsnabe 2,4 ist je eine berührungslose umlaufende Spaltdichtung 26 vorgesehen. Eine radial innere Dichtfläche 28 jeder Spaltdichtung 26 ist durch eine radial nach außen zeigende, im Lager-Axialschnitt gesehen ballig geformte, ringförmige Außen-Umfangsfläche 28 einer ringförmigen Ausnehmung 30 gebildet, die sich in axialer Richtung von außen in jede der Kupplungsnaben 2,4 erstreckt.

Die andere, radial äußere Dichtfläche 32 einer jeden Spaltdichtung 26 ist durch eine Innen-Umfangsfläche 32 eines rechten Deckels 34 und eines linken Deckels 36 gebildet, welche sich in axialer Richtung in die Ausnehmungen 30 der rechten Kupplungsnabe 4 und der linken Kupplungsnabe 2 erstrecken und welche an der zugehörigen rechten oder linken Gehäusehälfte 10,8 des Kupplungsgehäuses 6 durch Schrauben 37 befestigt sind. Durch die besondere Ausgestaltung der Spaltdichtungen 26 wird zum einen die Bewegungsfreiheit der Doppelgelenk-Zahnkupplung 1 nicht eingeschränkt. Zum anderen ist die Anordnung der Spaltdichtung 26 in der Ausnehmung 30 besonders platzsparend, wodurch die Baulänge der Doppelgelenk-Zahnkupplung 1 kürzer wird.

Die Deckel 34,36 sind an den voneinander abgewandten Stirnflächen 56 der beiden Gehäusehälften 8,10 des Kupplungsgehäuses 6 befestigt. Die äußeren Anschläge 24 sind im Inneren der Deckel 34,36 derart befestigt, daß sie für die bogenförmigen Kupplungszähne 16 und/oder Teile der Kupplungsnaben 2,4 axial begrenzend wirken. Die inneren Anschläge 22 sind im Inneren der Gehäusehälften 8,10 befestigt. Die inneren und die äußeren Anschläge 22 und 24 liegen radial auf einer Höhe, welche gleich oder nahe bei der radialen Höhe der Kupplungszähne 16 und 20 ist, so daß sie in der Schicht des Schmiermittels liegen, welches bei Kupplungsrotation durch Fliehkraft radial nach außen zu den Kupplungszähnen 16 und 20 getrieben wird.

Jeder Deckel 34,36 verfügt an einer radial außerhalb des Dichtungsspaltes 27 gelegene Außen-Umfangsfläche über einige unterschiedlich ausgeprägte Schmiermittel-Auffangrillen 38. Während der Stillstandszeit des Schienenfahrzeuges rotiert die Doppelgelenk-Zahnkupplung 1 nicht. In diesem stationären Zustand sammelt sich das Schmiermittel aufgrund der Gravitation in der unteren Kupplungshälfte. Die Schmiermittel-Auffangrillen 38 stellen sicher, daß das Schmiermittel nicht an den Spaltdichtungen 26 ansteht und daß in diesem Zustand ein Schmiermittelverlust effektiv verhindert wird. In der Anfahrphase des Schienenfahrzeugs wird das Schmiermittel durch die Formgebung der Schmiermittel-Auffangrillen 38 und durch die Beschleunigungskräfte in Richtung zu den Verzahnungen 14,18 geschleudert.

An jeder Kupplungsnabe 2,4 ist eine Schutzkappe 40 befestigt, welche ein Eindrigen von Schmutz in die Doppelgelenk-Zahnkupplung 1 verhindert. Die Schutzkappen 40 sind an den voneinander wegweisenden Stirnseiten der Kupplungsnaben 4,6 befestigt und umgeben haubenförmig die Deckel 34,36 und einen Teil der jeweiligen Gehäusehälfte 8,10 des Kupplungsgehäuses 6.

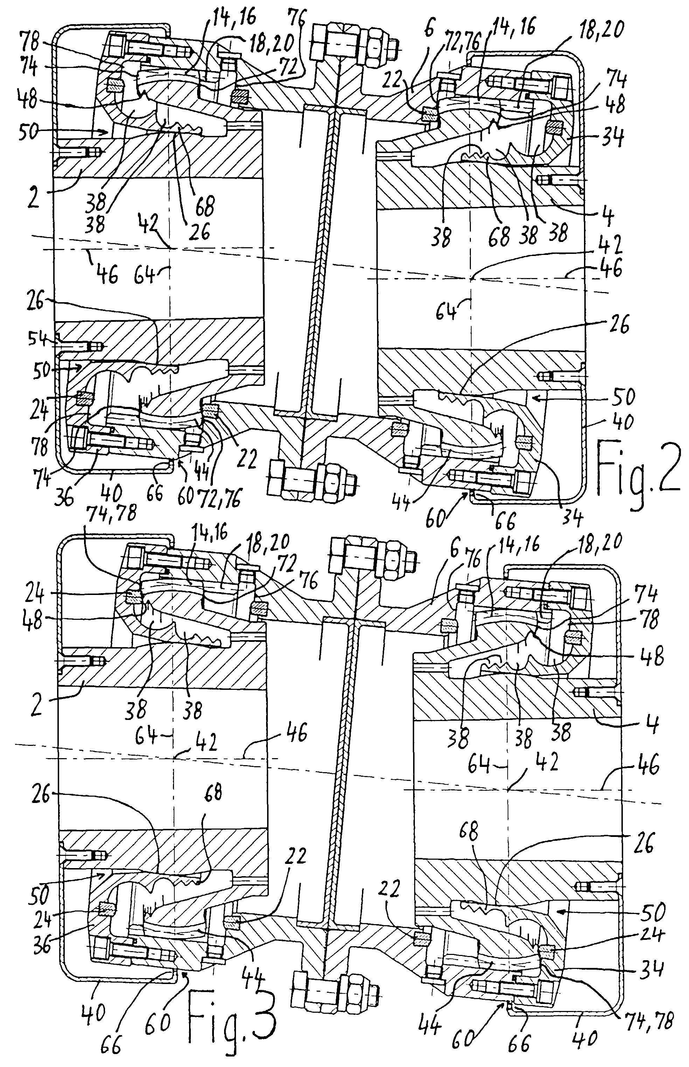

In Fig. 2 ist die Doppelgelenk-Zahnkupplung 1 in einer Position gezeigt, in welcher der Abstand der beiden Kupplungsnaben 2,4 relativ zu ihrer axial mittleren Position von Fig. 1 verringert ist, und sie einen radialen Versatz zueinander aufweisen. Der axiale und radiale Versatz sind dabei so groß, daß ein oberer Teil der Außenverzahnung 14 der rechten Kupplungsnabe 4 am axial inneren Anschlag 22 der rechten Gehäusehälfte des Kupplungsgehäuses 6 anschlägt und ein unterer Teil der Außenverzahnung 14 der linken Kupplungsnabe 2 am inneren Anschlag 22 der linken Gehäusehälfte 8 des Kupplungsgehäuses 6 anschlägt. Bedingt durch den Radialversatz der beiden Kupplungsnaben 2,4 drehen sich die rechte und die linke Gehäusehälfte 10,8 des Kupplungsgehäuses 6 jeweils um einen Drehpunkt 42 relativ zum Gehäuse 6, wobei die bogenförmigen Kupplungszähne 16 der Kupplungsnaben 2,4 in axialer Richtung auf den geraden Innenverzahnungen 18 der Gehäusehälften 10,8 entlang-gleiten, ohne daß sie außer Eingriff gelangen. Dieser Drehpunkt 42 ist jeweils der Mittelpunkt von in Zahnlängsrichtung kreisbogenförmigen Flankenlinien 44 der bogenförmigen Kupplungszähne 16 und der Krümmungsmittelpunkt von deren bogenförmigen Zahnrücken. Da die Kupplungsnaben 2,4 rotationssymmetrische Teile sind, liegt dieser Mittelpunkt auf einer Mittelachse 46 der jeweiligen Kupplungsnabe 2,4. Derartige Kupplungen mit bogenförmigen Verzahnungen sind unter dem Warenzeichen "Bogenzahn-Kupplung" bekannt. Bei der bevorzugten Ausführungsform ist die ballige Dichtfläche 28 der Spaltdichtung 26 eine im Axialschnitt gesehen kreisbogenförmige Kugelsegmentfläche einer Kugel, deren Mittelpunkt ebenfalls auf dem Drehpunkt 42 liegt. Dies hat den Vorteil, daß bei einer Drehung einer Gehäusehälfte 10,8 um ihren Drehpunkt 42 der Spalt 50 der Spaltdichtung 26 immer gleich groß bleibt. Die an den Kupplungsnaben 2 und 4 gebildete Dichtfläche 28 ist, im Kupplungs-Axialschnitt gesehen, bogenförmig, und erstreckt sich konzentrisch zur Nabenachse 46 um die gesamte Kupplungsnabe. Die Spaltdichtungen 26 sind radial innerhalb der Kupplungsverzahnungen 14 und 18 angeordnet.

Die in Fig. 3 gezeigte Position ergibt sich, wenn der Abstand der beiden Kupplungsnaben 2,4 vergrößert wird und sie radial zueinander versetzt sind. Der axiale und radiale Versatz sind dabei so groß, daß ein oberer Teil der Außenverzahnung 14 der linken Kupplungsnabe 2 am äußeren Anschlag 24 des linken Deckels 36 anschlägt und ein unterer Teil der Außenverzahnung 14 der rechten Kupplungsnabe 4 am äußeren Anschlag 24 des rechten Deckels 34 anschlägt.

Doppelgelenk-Zahnkupplungen nach der Erfindung eignen sich insbesondere zur Verbindung eines Fahrantriebs-Motors mit einem Getriebe in einem Schienenfahrzeug, beispielsweise in einer Lokomotive oder in einem Triebwagen. Zwischen einer Wand oder Gehäuse des Motors und einer Wand oder Gehäuse des Getriebes ist nur wenig Zwischenraum, in welchem die Doppelgelenk-Zahnkupplung untergebracht werden muß. Zwischen dem Motor und dem Getriebe entstehen während des Betriebes große Radialverlagerungen von beispielsweise plus/minus 10 mm und Winkelverlagerungen ihrer Wellenachsen von ungefähr sechs Grad. Die von der Kupplung zu übertragenden Drehzahlen liegen sehr hoch bei bis zu 6000 U/min. Auch die zu übertragenden Drehmomente sind sehr hoch und liegen während des Betriebes zwischen beispielsweise 400 Nm bis 1100 Nm, wobei die dynamischen Drehmomente beim Anfahren bis über 7000 Nm steigen können. Der Zwischenraum, in welchem die Kupplung zwischen Motor und Getriebe untergebracht werden muß, ist nach unten, zu den Schienen hin, offen. Dadurch ist die Kupplung extremen Umweltbedingungen ausgesetzt: extreme Kälte abwechselnd mit extremer Hitze, Staub, Steinschlag, Teile von Tieren, welche von dem Schienenfahrzeug überrollt wurden, mechanische Erschütterungen, hohe Fliehkräfte bei Kurvenfahrten und durch mechanische Stöße, wenn das Schienenfahrzeug über Weichen oder Schienen-Verbindungsstellen fährt. Bei radialen Verlagerungen der Motorwelle und der Eingangswelle des Getriebes ergeben sich entsprechend radiale Verlagerungen der mit ihnen verbundenen beiden Kupplungsnaben 2 und 4. Bei diesen radialen Verlagerungen stellt sich das Kupplungsgehäuse 6 schräg zu den Mittelachsen 46 der beiden Naben 2 und 4. Diese Mittelachsen 46 fluchten nur dann entsprechend Fig. 1 miteinander, wenn die beiden Naben 2 und 4 ohne radialen Versatz miteinander fluchten. Für die dabei auftretende Schrägstellung des Gehäuses 6 muß die Balligkeit und die Zahnflankenkrümmung der Kupplungszähne 16 der Außenverzahnung 14 entsprechend groß sein, d.h. einen kleinen Krümmungsradius haben. Im Rahmen der Erfindung liegen auch Ausführungsformen, bei welchen nicht die Kupplungszähne 16 der Außenverzahnung 14 bogenförmig sind, sondern die Kupplungszähne 20 der Innenverzahnung 18. Eine solche Ausführungsform ist jedoch viel schwieriger und teurer herzustellen, weshalb hier zur einfacheren Beschreibung der Erfindung nur die in den Zeichnungen dargestellte Ausführungsform beschrieben wird.

Bei den genannten hohen Verlagerungen und Drehzahlen ergeben sich insbesondere Probleme für die Dichtung der Zahnkupplung, weil weder Schmiermittel aus ihr austreten noch Schmutz von außen in sie eindringen darf. Ein weiteres Problem bei der Abdichtung sind die genannten vielen Verlagerungen pro Minute der Naben 2 und 4 relativ zum Gehäuse 6 und der sich dadurch ergebenden Positionsveränderungen der einander gegenüberliegenden Teile an den Dichtungsstellen. Dadurch reiben beim Stand der Technik die aneinander anliegenden Dichtungsflächen ständig aneinander, so daß sie schnell abgenutzt und undicht werden. Bei Verwendung von Gummimanschetten, welche die Dichtungsspalte überbrücken, werden diese Gummimanschetten durch die häufigen Verlagerungen ständig mechanisch beansprucht, und durch die genannten Umweltbedingungen zusätzlich belastet, so daß auch sie schnell zerstört werden. Ein Ziel der Erfindung ist es deshalb, die Dichtung der Kupplung so auszubilden, daß sie eine lange Lebensdauer hat und wartungsfrei ist.

Während der Rotation der Doppelgelenk-Zahnkupplung 1 mit Betriebs-Drehzahl wird das in ihr enthaltene Schmiermittel durch Fliehkraft radial nach außen zu den Kupplungsverzahnungen 14 und 16 getrieben und bildet dort einen Schmiermittelring um die Mittelachsen 46, in welchem die Kupplungsverzahnungen 14 und 16 liegen und dadurch geschmiert werden. Bei niedrigen Drehzahlen und insbesondere bei Stillstand der Doppelgelenk-Zahnkupplung 1 strömt das Schmiermittel nach unten und sammelt sich an tiefer gelegenen Stellen. Weder bei Stillstand oder langsamen Rotationen noch bei anschließender Beschleunigung auf hohe Drehzahlen darf Schmiermittel über die Dichtungsstellen aus der Kupplung heraus ausdringen.

Gemäß der Erfindung ist zwischen jeder Kupplungsnabe 2 und 4 und dem Kupplungsgehäuse 6 je eine berührungsfreie Spaltdichtung 26 vorgesehen, welche wartungsfrei und verschleißfrei ist. Die Schmiermittel-Auffangrillen 38 sind radial innerhalb und gegenüber von mindestens einer ringförmigen ring-rippenartigen Schmiermittel-Abtropfkante 48 angeordnet, welche am axial äußeren Abschnitt der ringförmigen Ausnehmung 30 bei jeder Kupplungsnabe 2 und 4 gebildet ist. Die Schmiermittel-Auffangrillen 38 fangen alles durch Gravitation aus dem Bereich der Kupplungsverzahnungen 14,18 direkt oder an der Abtropfkante 48 abtropfende Schmiermittel auf und verhindern dadurch, daß Schmiermittel an oder in den Dichtungsspalt 50 der Spaltdichtungen 26 gelangen kann.

Von außen wirken nicht nur die genannten Umwelteinflüsse auf die Doppelgelenk-Zahnkupplung 1, sondern das Schienenfahrzeug und damit auch die Doppelgelenk-Zahnkupplung 1 werden zum Reinigen häufig mit Waschflüssigkeit oder mit Dampf unter hohem Druck abgespritzt. Damit bei diesen Umwelteinflüssen und diesen Reinigungseinflüssen kein Schmutz, Hochdruck-Flüssigkeit oder Hochdruck-Dampf in die Doppelgelenk-Zahnkupplung 1 eindringen kann, ist gemäß der Erfindung die Schutzkappe 40 vorgesehen. Bei der bevorzugten Ausführungsform ist die Schutzkappe 40 ringförmig und sie hat, im Axialschnitt gesehen, einen radialen Schenkel 52, welcher durch Schrauben 54 an einer äußeren Stirnseite 56 der Kupplungsnaben 2,4 festgeschraubt ist, und einen Längsschenkel 58. Die Längsschenkel 58 bilden an ihrem axial inneren Ende je eine berührungsfreie äußere Spaltdichtung 60 mit der Außenumfangsfläche 62 ihrer zugehörigen Kupplungsnabe 2 bzw. 4, vorzugsweise an einer Stelle, welche in einer relativ zur Mittelachse 46 radialen Ebene 64 liegt, in welcher auch der Drehpunkt 42 liegt und die Außenverzahnung 14 ihren größten Außendurchmesser hat. Die genannte Position der äußeren Spaltdichtung 60 in der Radialebene 64 bewirkt, daß ihre Spaltweite auch dann ungefähr gleich groß bleibt und eine Berührung der Schutzkappe 40 mit dem Kupplungsgehäuse 6 vermieden wird, wenn Relativbewegungen zwischen diesem Kupplungsgehäuse 6 und den Kupplungsnaben 2 und/oder 4 auftreten. Gemäß einer nicht dargestellten anderen Ausführungsform ist die Schutzkappe 40 nicht an ihrer zugehörigen Kupplungsnabe 2 bzw. 4 befestigt, sondern die eine Schutzkappe 40 kann an dem Gehäuse oder der Wand des benachbarten Motors befestigt sein, und die andere Schutzkappe 40 kann an dem benachbarten Gehäuse oder der benachbarten Wand des Getriebes des Fahrzeuges befestigt sein. Dabei können die radialen Schenkel 52 der Schutzkappen 40 entfallen.

Die Schutzkappe 40 kann an radial am weitesten außen gelegenen Stellen oder benachbart zur äußeren Spaltdichtung 60 mit Ablauföffnungen 66 versehen sein, über welche Flüssigkeit nach außen ablaufen kann, welche zuvor unerwünscht in den Zwischenraum zwischen der Schutzkappe 40 und die von ihr abgedeckten Teile der Doppelgelenk-Zahnkupplung 1 eingedrungen ist.

Durch die großen Radialbewegungen, Kippbewegungen und Axialbewegungen der Kupplungsnaben 2 und 4 und des Kupplungsgehäuses 6 relativ zueinander, beispielsweise während Kurvenfahrten, wenn sich die Fahrgestelle der Lokomotive extrem relativ zueinander verdrehen, muß innerhalb der Doppelgelenk-Zahnkupplung 1 relativ viel Raum für die erforderliche Bewegungsfreiheit dieser Teile sein.

Um trotzdem eine kleine Baugröße zu haben, ist in der axial äußeren Stirnseite jeder Kupplungsnabe 2 und 4 die ringförmige Ausnehmung 30 gebildet und die einander nicht berührenden Dichtflächen 28 und 32 der Spaltdichtungen 26 liegen innerhalb der stirnseitigen Ausnehmungen 30. Beide Dichtflächen 28 und 30 erstrecken sich konzentrisch ringförmig um die Mittelachse 36. Der größte Außendurchmesser der radial nach außen zeigenden gewölbten Außenumfangs-Dichtfläche 28 liegt auf der gleichen radialen Ebene 64 wie der größte Außendurchmesser der bogenförmigen Zähne 16 der Kupplungs-Außenverzahnung 14 der Kupplungsnaben 2 und 4, und ihr Krümmungsmittelpunkt liegt gemeinsam im Drehpunkt 42 der zugehörigen Kupplungsnabe 2 bzw. 4. Die der gewölbten Außenumfangs-Dichtungsfläche 28 mit radialem Abstand gegenüberliegende, radial nach innen zeigende Innenumfangs-Dichtungsfläche 32 des Kupplungsgehäuses 6 hat vorzugsweise eine parallel zur Mittelachse 46 ihrer Kupplungsnabe 2 bzw. 4 verlaufende gerade Form und ist an einem ringförmigen Vorsprung 68 eines jeden der beiden Deckel 34 und 36 gebildet. Der Vorsprung 68 ragt axial von außen nach innen in die ringförmige Ausnehmung 30 hinein. Der ringförmige, ungefähr zylindrische Vorsprung 68 hat an seinem Innenumfang die Innenumfangs-Dichtfläche 32 der berührungsfreien Spaltdichtung 26 und an seinem Außenumfang die Schmiermittel-Auffangrillen 38. Die Anordnung der Schmiermittel-Auffangrillen 38 kann durch eine einzige Rille oder entsprechend den Zeichnungen durch eine Vielzahl von Rillen 38 gebildet sein. Das Volumen der Schmiermittel-Auffangrillen 38 ist so groß, daß sie bei einem Rotationsstillstand der Zahnkupplung 1 des gesamte Schmiermittel auffangen, welches durch Gravitation vom radialen äußeren Innenumfang der Kupplung, inbesondere aus den Kupplungsverzahnungen 14 und 18, nach unten wegläuft, und sie dieses Schmiermittel unter Umgehung des Dichtungsspaltes 50 der Spaltdichtung 26 an eine tiefer gelegene Stelle des Kupplungsinnenraumes leiten. Dazu ist erforderlich, daß mindestens eine Schmiermittel-Abtropfkante 48 den Schmiermittel-Auffangrillen 38 gegenüberliegt und ihnen das Schmiermittel zuführt. Ein Teil des Schmiermittels läuft oder tropft aus den Kupplungsverzahnungen 14 und 18 in eine oder mehrere der Auffangrillen 38. Die ringförmige Ausnehmung 30 hat, im Axialschnitt gesehen, von innen nach außen einen zunehmend größeren Öffnungsquerschnitt, und die Ringrippen 70, welche die Schmiermittel-Auffangrillen 38 voneinander trennen, haben korrespondierend zum Querschnitt der Ausnehmung 30, axial von innen nach außen zunehmend, stufenweise einen größeren Außendurchmesser. Diese axial von innen nach außen zunehmend größere Keilform der ringförmigen Ausnehmung 30 und der Ringrippen 70 der in der Ausnehmung untergebrachten Auffangrillen 38 ermöglicht die genannten Relativbewegungen der Kupplungsnaben 2 und 4 und des Kupplungsgehäuses 6 relativ zueinander, ohne daß viel Bauraum benötigt wird.

In Extremstellungen kann es entsprechend den Fig. 2 und 4 zu einem axialen Kontakt zwischen den inneren Anschlägen 22 oder den äußeren Anschlägen 24 des Kupplungsgehäuses 6 einerseits und ihnen gegenüberliegenden inneren Anschlagflächen 72 oder äußeren Anschlagflächen 74 der Kupplungsnaben 2 und 4 kommen. Die inneren und äußeren Anschläge der Kupplungsnaben 2 und 4 sind durch die Stirnseiten der Kupplungs-Zähne der Außenverzahnung 14 oder je unmittelbar neben den Kupplungszähnen 16 der Außenverzahnung 14 an der Kupplungsnabe 2 bzw. 4 konvex nach außen gewölbt gebildet. Vorzugsweise ist das Kupplungsgehäuse 6 neben seinen elastischen Anschlägen 22 und 24 mit gehärteten Metall-Anschlagflächen versehen, so daß die elastischen Anschläge 22 und 24 nur zur Aufschlag-Dämpfung beim Aufschlag der Anschläge 72 oder 74 der Kupplungsnaben 2 und 4 dienen, jedoch die maximale Anschlagkraft dann durch die inneren Metall-Anschlagflächen Metall-Anschlagflächen 76 oder die äußeren 78 des Gehäuses 1 aufgenommen wird. Die axial äußeren elastischen Anschläge 24 und axial äußeren Metall-Anschläge 78 des Kupplungsgehäuses 6 sind an seinen Deckeln 34 und 36 angeordnet oder gebildet.

Wenn eine der beiden Kupplungsnaben 2 oder 4, ausgehend von der in Fig. 1 dargestellten axialen Mittelstellung, axial nach außen bis zum äußeren Gehäuseanschlag 24 bewegt wird, beispielsweise die in Fig. 1 rechts dargestellte Kupplungsnabe 4, dann könnte anschließend das Kupplungsgehäuse 6 um die gleiche Strecke und zusätzlich um die Strecke des Abstandes nach rechts bewegt werden, welchen die Außenverzahnung 14 der rechten Kupplungsnabe 4 vom inneren Anschlag 22 des Kupplungsgehäuses 6 in Fig. 1 hatte, wenn nicht bereits nach halber Verschiebestrecke des Kupplungsgehäuses 6 sein axial äußerer Anschlag 24 am äußeren Anschlag 74 der linken Kupplungsnabe 2 anstoßen würde. Die axiale Verstellmöglichkeit des Kupplungsgehäuses 6 wird also auf die Hälfte reduziert, weil beidseitig von jeder Kupplungsverzahnung 14,18 Anschläge 22,24,76,78 und 72,74 vorhanden sind. Alle diese Anschläge liegen radial so weit weg von der Mittelachse 46 in einem Bereich, wo sich bei Rotation der Zahnkupplung 1 durch Fliehkraft auch das Schmiermittel befindet. Dadurch dämpft das Schmiermittel den Aufschlag der Anschläge 72,74 auf den Anschlägen 22,24,76,78. Die Halbierung der maximal möglichen axialen Verschiebungsstrecke des Kupplungsgehäuses 6 ermöglicht in einem vorgegebenen axialen Zwischenraum zwischen einem Motorgehäuse und einem Getriebegehäuse die Kupplungsverzahnungen 14 und 18 auf einem größtmöglichen Abstand voneinander anzuordnen, ohne daß das Kupplungsgehäuse 6 oder die Schutzkappen 40 am Motorgehäuse und/oder Getriebegehäuse anstoßen. Bei Zahnkupplungen, welche im Dauerbetrieb mit einer bestimmten Mindestdrehzahl rotieren, bleibt das Schmiermittel ständig radial außerhalb der Kupplungs-Dichtungsstellen und stellt deshalb kein Dichtungsproblem dar. Bei Verwendung in einem Antriebsstrang von Schienenfahrzeugen hat man jedoch ständig wechselnde Stopp-, Fahr-, Beschleunigungs- und Brems-Situationen. Die in den Zeichnungen dargestellte Doppelgelenk-Zahnkupplung nach der Erfindung hat sich auch nach über 1000 Teststunden auf dem Prüfstand, auf welchem die Stopp-, Fahr-, Beschleunigungs- und Bremsmanöver in der bei Schienenfahrzeugen auftretenden Häufigkeit getestet wurde, als verschleißfrei, wartungsfrei und absolut dicht erwiesen.

Die berührungsfreien Dichtungsflächen 28 und 32 der Spaltdichtung 26 sind durch die Deckel 34 und 36 und damit wie diese aus Metall gebildet.

Die Innenseiten der Deckel 34 und 36 des Gehäuses 6 erstrecken sich mit axialem Abstand von der äußeren Stirnseite der Außenverzahnung 14 der Naben 2 und 4 von einer radial außerhalb von dieser Außenverzahnung 14 gelegenen Gehäusestelle bis in die radial innerhalb von ihr gelegene stirnseitig ringförmige Ausnehmung 30 der Naben 2 und 4 und gehen dort in die Auffangrillen 38 über.

## Patentansprüche

1. Zahngelenkkupplung, enthaltend ein Gehäuse (6); mindestens eine im Gehäuse (6) untergebrachte Nabe (2,4); jede Nabe (2,4) ist mit einer nabenfesten Außenverzahnung (14) versehen, welche koaxial in einer gehäusefesten Innenverzahnung (18) des Gehäuses (6) angeordnet und mit ihr zur Drehmomentübertragung in Eingriff ist, wobei die Kupplungszähne (16,20) der Verzahnungen (14,18) eine bestimmte Länge haben und mindestens die Kupplungszähne (16) von einer der beiden Verzahnungen (14) eine in Kupplungslängsrichtung bogenförmige Form derart haben, daß die Nabe (2,4) quer zu ihrer Mittelachse (46) relativ zum Gehäuse (6) Winkelbewegungen innerhalb vorbestimmter Grenzen machen kann, ohne daß ihre Außenverzahnung (14) den Eingriff mit der Innenverzahnung (18) verliert; Dichtungsmittel (26) zwischen dem Gehäuse (6) und der Nabe (2,4) auf einem radial kleineren Abstand von der Mittelachse (46) als die Kupplungsverzahnungen (14,18) zur Vermeidung, daß Schmiermittel aus dem Gehäuseinnenraum in die Gehäuseumgebung austreten kann;
**dadurch gekennzeichnet,** daß die Dichtungsmittel (26) eine berührungslose Spaltdichtung mit einem ringförmigen Dichtungsspalt (50) aufweisen, welcher auf dem genannten radial kleineren Abstand von der Mittelachse (46) zwischen einer ringförmigen nabenfesten Dichtfläche (28) der Nabe (2,4) und einer ihr mit Abstand gegenüberliegenden gehäusefesten Dichtfläche (32) des Gehäuses (6) derart gebildet ist, daß bei allen Bewegungen der Nabe (2,4) relativ zum Gehäuse (6) die Dichtflächen (28,32) sich nicht berühren; daß die Nabe (2,4) mit mindestens einer sich ringförmig um die Mittelachse (46) erstreckenden und zur Mittelachse (46) gerichteten Schmiermittel-Abtropfkante (48) versehen ist, die radial auf einem kleineren Durchmesser als die Kupplungszähne (16,20) und auf einem größeren Durchmesser als der Dichtungsspalt (50) liegt; daß das Gehäuse (6) mit einer ringförmig um die Mittelachse (46) sich erstreckenden Schmiermittel-Auffangkanalanordnung (38) versehen ist, welche zwischen der Abtropfkante (48) und dem Dichtungsspalt (50) angeordnet ist und ein der Abtropfkante (48) gegenüberliegendes, von der Mittelachse (46) wegzeigendes Kanalbett hat, dessen Bettbreite sich mindestens über die Strecke erstreckt, um welche die Abtropfkante (48) zusammen mit ihrer Nabe (2,4) innerhalb der vorbestimmten Grenzen Bewegungen machen kann, so daß die Auffangkanalanordnung (38) in allen Positionen das von der Abtropfkante (48) abtropfende Schmiermittel auffängt und durch Gravitation um die Mittelachse (46) herum nach unten zu einer radial weiter außen gelegenen Stelle im Gehäuse (6) ableitet, ohne daß das Schmiermittel zum Dichtungsspalt (50) gelangen kann, wenn die Zahnkupplung nicht oder nur sehr langsam rotiert.

2. Zahngelenkkupplung nach Anspruch 1,
**dadurch gekennzeichnet,**
daß eine den Dichtungsspalt (50) auf der Kupplungsaußenseite abschirmende Abdeckung (40) vorgesehen ist.

3. Zahngelenkkupplung nach Anspruch 2,
**dadurch gekennzeichnet,**
daß zwischen der Abdeckung (40) und dem Gehäuse (6) eine zweite berührungsfreie ringförmige Spaltdichtung (60) gebildet ist.

4. Zahngelenkkupplung nach Anspruch 2 oder 3,
**dadurch gekennzeichnet,**
daß die Abdeckung (40) an einer radial am weitesten außen gelegenen Stelle mit einem Flüssigkeitsauslaß (66) zum Abfluß von Flüssigkeit durch Gravitation versehen ist.

5. Zahngelenkkupplung nach einem der Ansprüche 2 bis 4,
**dadurch gekennzeichnet,**
daß die Abdeckung (40) an der Nabe (2) befestigt ist.

6. Zahngelenkkupplung nach einem der vorhergehenden Ansprüche,
**dadurch gekennzeichnet,**
daß die Schmiermittel-Auffangkanalanordnung mindestens zwei axial nacheinander angeordnete Umfangsrillen (38) und sie seitlich begrenzende Umfangsrippen (70) aufweist.

7. Zahngelenkkupplung nach einem der vorhergehenden Ansprüche,
**dadurch gekennzeichnet,**
daß in einer axial äußeren Stirnseite der Nabe (2,4) eine ringförmige Ausnehmung (30) gebildet ist, welche sich um die Mittelachse (46) erstreckt, daß das Gehäuse (6) einen Teil (34,36) aufweist, welcher sich von einer radial außerhalb der Kupplungsverzahnung (14,18) gelegenen Stelle über die axial äußeren Enden der Kupplungsverzahnung (14,18) hinweg radial nach innen und dann axial in die ringförmige Ausnehmung (30) erstreckt, daß der Dichtungsspalt (50) der Spaltdichtung in der ringförmigen Ausnehmung (30) zwischen dem in ihn hineinragenden Gehäuse-Teil (34,36) und einem radial innerhalb von diesem Gehäuse-Teil (34,36) gelegenen Abschnitt der Nabe (2,4) gebildet ist, und daß die Schmiermittel-Auffangkanalanordnung (38) auf der vom Dichtungsspalt (50) abgewandten, radial nach außen zeigenden Außenumfangsfläche des Gehäuse-Teils (34,36) gebildet ist, welcher in die ringförmige Ausnehmung (30) hineinragt.

8. Zahngelenkkupplung nach Anspruch 7,
**dadurch gekennzeichnet,**
daß mindestens eine der beiden mit Abstand gegenüberliegenden Dichtungsflächen (28,32) der berührungslosen Spaltdichtung (26) im Kupplungslängsschnitt gesehen, bogenförmig ist.

9. Zahngelenkkupplung nach Anspruch 8,
**dadurch gekennzeichnet,**
daß die nabenfeste Dichtfläche (28), im Kupplungslängsschnitt gesehen, kreisbogenförmig ist und einen Krümmungsmittelpunkt hat, der in oder nahe bei dem Krümmungsmittelpunkt (42) einer kreisbogenförmigen Krümmung des Zahnkopfes der Kupplungszähne (16) der nabenfesten Außenverzahnung (14) liegt.

10. Zahngelenkkupplung nach einem der vorhergehenden Ansprüche,
**dadurch gekennzeichnet,**
daß die nabenfeste Dichtfläche (28) durch eine Oberfläche der Nabe (2,4) gebildet ist und daß die ihr mit Abstand gegenüberliegende gehäusefeste Dichtfläche (32) durch eine Oberfläche eines Teils (36) des Gehäuses (6) gebildet ist.

11. Zahngelenkkupplung nach einem der vorhergehenden Ansprüche,
**dadurch gekennzeichnet,**
daß es eine Doppelgelenk-Zahnkupplung ist, welche zwei von den genannten Naben (2,4) enthält, die axial hintereinander und entgegengesetzt zueinander angeordnet sind, so daß ihre stirnseitigen Außenflächen entgegengesetzt voneinander wegzeigen, und wobei die Außenverzahnung (14) jeder Nabe (2,4) mit einer Innenverzahnung (18) des Gehäuses (6) in Eingriff ist.

12. Zahngelenkkupplung nach Anspruch 11,
**dadurch gekennzeichnet,**
daß das Gehäuse (6) beidseitig von jeder Nabe (2,4) mit Anschlägen (22,24,76,78) versehen ist, welchen axial entgegengesetzt zueinander angeordnete Anschlagflächen (72,74) der Naben (2,4) gegenüberliegen, so daß der axiale Bewegungsraum jeder Nabe (2,4) relativ zum Gehäuse (6) durch die Anschläge begrenzt ist.

13. Zahngelenkkupplung nach Anspruch 11 oder 12,
**dadurch gekennzeichnet,**
daß mindestens einige (22,24) der Anschläge (22,24,76,78,72,74) elastische Dämpfungselemente zur Dämpfung des axialen Aufpralls der Nabe (2,4) am Gehäuse (6) aufweisen.

14. Zahngelenkkupplung nach einem der Ansprüche 11 bis 13,
**dadurch gekennzeichnet,**
daß mindestens einige der Anschläge (22,24,76,78,72,74) radial von der Mittelachse (46) so weit nach außen versetzt angeordnet sind, daß sie sich in der Nähe oder auf gleicher radialer Höhe befinden wie die Kupplungszähne (16,20) der Kupplungsverzahnungen (14,18).

## Claims

1. Articulated toothed coupling, comprising a housing (6); at least one hub (2, 4) accommodated in the housing (6), each hub (2, 4) being provided with an outer toothing (14), which is secure with respect to the hub, is arranged coaxially in an inner toothing (18) of the housing (6), the inner toothing (18) being secure with respect to the housing, and is engaged with said inner toothing (18) for the purposes of torque transmission, wherein the coupling teeth (16, 20) of the toothings (14, 18) are of a certain length and at least the coupling teeth (16) of one of the two toothings (14) are of a shape that is curved in the longitudinal direction of the coupling in such a way that the hub (2, 4) can execute angular movements within predetermined limits transversely to its central axis (46) in relation to the housing (6) without its outer toothing (14) becoming disengaged from the inner toothing (18); sealing means (26) between the housing (6) and the hub (2, 4) at a radially shorter distance from the central axis (46) than the coupling toothings (14, 18) in order to avoid a situation where it is possible for lubricant to emerge from the interior of the housing into the surroundings of the housing, characterised in that the sealing means (26) have a non-contact gap seal with an annular sealing gap (50) which is formed at the said radially shorter distance from the central axis (46) between an annular sealing surface (28) of the hub (2, 4) that is secure with respect to the hub and a sealing surface (32) of the housing (6) that is secure with respect to the housing and lies opposite the hub at a distance therefrom, the annular sealing gap (50) being formed in such a way that in the case of all movements of the hub (2, 4) in relation to the housing (6) the sealing surfaces (28, 32) do not come into contact with each other; in that the hub (2, 4) is provided with at least one lubricant-drip edge (48) which extends annularly about the central axis (46) and is directed towards the central axis (46) and radially lies on a smaller diameter than the coupling teeth (16, 20) and on a larger diameter than the sealing gap (50); in that the housing (6) is provided with a lubricant-collecting channel arrangement (38) which extends annularly about the central axis (46), is arranged between the drip edge (48) and the sealing gap (50) and has a channel bed that lies opposite the drip edge (48) and points away from the central axis (46) and the bed width of which extends at least over the section about which the drip edge (48) together with its hub (2, 4) can execute movements within the predetermined limits so that the collecting channel arrangement (38) collects the lubricant, dripping off from the drip edge (48), in all positions and diverts it by means of gravitation about the central axis (46) downwards to a point in the housing (6) that is located radially further outside, without the lubricant being able to reach the sealing gap (50) when the toothed coupling is not rotating or is only rotating very slowly.

2. Articulated toothed coupling according to claim 1, characterised in that a cover (40) is provided screening the sealing gap (50) on the outside of the coupling.

3. Articulated toothed coupling according to claim 2, characterised in that a second non-contact annular gap seal (60) is formed between the cover (40) and the housing (6).

4. Articulated toothed coupling according to claim 2 or 3, characterised in that the cover (40), at a point which radially is located furthest outside, is provided with a fluid outlet (66) for the discharge of fluid by means of gravitation.

5. Articulated toothed coupling according to one of claims 2 to 4, characterised in that the cover (40) is secured to the hub (2).

6. Articulated toothed coupling according to one of the preceding claims, characterised in that the lubricant-collecting channel arrangement has at least two circumferential grooves (38), which are arranged axially in succession, and has laterally delimiting circumferential ribs (70).

7. Articulated toothed coupling according to one of the preceding claims, characterised in that formed in an axially outer face of the hub (2, 4) there is an annular recess (30) which extends about the central axis (46), in that the housing (6) has a portion (34, 36) which extends from a point located radially outside the coupling toothing (14, 18) over the axially outer ends of the coupling toothing (14, 18) radially inwards and then axially into the annular recess (30), in that the sealing gap (50) of the gap seal is formed in the annular recess (30) between the housing portion (34, 36) projecting into it and a section of the hub (2, 4) located radially inside this housing portion (34, 36), and in that the lubricant-collecting channel arrangement (38) is formed on the outer peripheral surface of the housing portion (34, 36) that is remote from the sealing gap (50) and points radially outwards and which projects into the annular recess (30).

8. Articulated toothed coupling according to claim 7, characterised in that at least one of the two sealing surfaces (28, 32) of the non-contact gap seal (26) lying opposite each other and at a distance from each other is curved, viewed in longitudinal section through the coupling.

9. Articulated toothed coupling according to claim 8, characterised in that the sealing surface (28) that is secure with respect to the hub is circular-arc shaped, viewed in longitudinal section through the coupling, and has a central point of curvature which lies at or close to the central point (42) of curvature of a circular-arc shaped curvature of the tooth tip of the coupling teeth (16) of the outer toothing (14) that is secure with respect to the hub.

10. Articulated toothed coupling according to one of the preceding claims, characterised in that the sealing surface (28) that is secure with respect to the hub is formed by a surface of the hub (2, 4), and in that the sealing surface (32) that is secure with respect to the housing and lies opposite the sealing surface (28) at a distance therefrom is formed by a surface of a portion (36) of the housing (6).

11. Articulated toothed coupling according to one of the preceding claims, characterised in that it is a double articulated toothed coupling which contains two of the said hubs (2, 4) which are arranged axially one after the other and in opposition to each other so that their outer end faces point away from each other in opposition to each other, and wherein the outer toothing (14) of each hub (2, 4) is engaged with an inner toothing (18) of the housing (6).

12. Articulated toothed coupling according to claim 11, characterised in that the housing (6), on both sides of each hub (2, 4), is provided with stops (22, 24, 76, 78) opposite which lie stop faces (72, 74) of the hubs (2, 4), arranged axially in opposition to each other, so that the space for axial movement of each hub (2, 4) is delimited in relation to the housing (6) by the stops.

13. Articulated toothed coupling according to claim 11 or 12, characterised in that at least some (22, 24) of the stops (22, 24, 76, 78, 72, 74) have elastic damping elements for the purpose of damping the axial impact of the hub (2, 4) on the housing (6).

14. Articulated toothed coupling according to one of claims 11 to 13, characterised in that at least some of the stops (22, 24, 76, 78, 72, 74) are arranged so as to be radially and outwardly offset from the central axis (46) to such an extent that they are located in the vicinity of or at the same radial level as the coupling teeth (16, 20) of the coupling toothings (14, 18).

## Revendications

1. Accouplement à dents articulé, comportant un carter (6), au moins un moyeu (2, 4) logé dans le carter (6), chaque moyeu étant muni d'une denture extérieure (14) qui est fixe sur le moyeu, est disposée coaxialement dans une denture intérieure (18) fixe sur le carter (6) et qui est engrenée avec elle pour la transmission de couple, les dents d'accouplement (16, 20) des dentures (14, 18) présentant une longueur déterminée et au moins les dents d'accouplement (16) de l'une des deux dentures (14) ayant une forme en arc dans le sens longitudinal de l'accouplement de telle sorte que le moyeu (2, 4) peut faire, transversalement à son axe central (46) par rapport au carter (6), des déplacements angulaires dans des limites prédéterminées sans que sa denture extérieure (14) ne perde la prise avec la denture intérieure (18), comportant des moyens d'étanchéité (26) entre le carter (6) et le moyeu (2, 4) à une distance plus petite radialement de l'axe central (46) que les dentures d'accouplement (14, 18) pour éviter que le lubrifiant ne puisse sortir de l'intérieur du carter dans l'environnement du carter, caractérisé en ce que les moyens d'étanchéité (26) présentent un joint d'étanchéité à fente sans contact avec une fente d'étanchéité (50) annulaire qui, à la distance citée plus petite radialement de l'axe central (46), est formée entre une surface d'étanchéité (28) annulaire et fixe sur le moyeu (2, 4) et une surface d'étanchéité (32) du carter (6) qui lui fait face à une certaine distance et qui est fixe sur le carter, de telle sorte que, lors de tous les déplacements du moyeu (2, 4) par rapport au carter (6), les surfaces d'étanchéité (28, 32) ne se touchent pas, en ce que le moyeu (2, 4) est muni au moins d'un bord d'égouttage (48) de lubrifiant qui s'étend en forme d'anneau autour de l'axe central (46), est orienté vers l'axe central (46) et se trouve radialement sur un diamètre plus petit que les dents d'accouplement (16, 20) et sur un diamètre plus grand que la fente d'étanchéité (50), en ce que le carter (6) est muni d'un agencement du canal collecteur de lubrifiant (38) qui s'étend en forme d'anneau autour de l'axe central (46), est disposé entre le bord d'égouttage (48) et la fente d'étanchéité (50) et présente une cuvette de canal qui est opposée au bord d'égouttage (48), éloignée de l'axe central (46) et dont la largeur s'étend au moins sur la distance sur laquelle le bord d'égouttage (48) avec son moyeu (2, 4) peut faire des déplacements dans des limites prédéterminées de telle sorte que l'agencement du canal collecteur (38) collecte dans toutes les positions le lubrifiant s'égouttant du bord d'égouttage (48) et, par gravitation autour de l'axe central (46), dérive dans le carter (6), vers le bas vers un point situé plus à l'extérieur radialement sans que le lubrifiant ne puisse arriver à la fente d'étanchéité (50) quand l'accouplement à dents ne tourne pas ou ne tourne que très lentement.

2. Accouplement à dents articulé selon la revendication 1, caractérisé en ce qu'il est prévu un capot de protection (40) recouvrant la fente d'étanchéité (50) sur le côté extérieur de l'accouplement.

3. Accouplement à dents articulé selon la revendication 2, caractérisé en ce qu'un second joint d'étanchéité à fente (60) annulaire et sans contact est formé entre le capot de protection (40) et le carter (6).

4. Accouplement à dents articulé selon la revendication 2 ou 3, caractérisé en ce que le capot de protection (40) est muni, sur un point situé le plus à l'extérieur radialement, d'une sortie de liquide (66) pour l'écoulement du liquide par gravitation.

5. Accouplement à dents articulé selon l'une quelconque des revendications 2 à 4, caractérisé en ce que le capot de protection (40) est fixé sur le moyeu (2).

6. Accouplement à dents articulé selon l'une quelconque des revendications précédentes, caractérisé en ce que l'agencement du canal collecteur de lubrifiant présente au moins deux rainures périphériques (38) disposées axialement l'une derrière l'autre et des nervures périphériques (70) les limitant latéralement.

7. Accouplement à dents articulé selon l'une quelconque des revendications précédentes, caractérisé en ce que dans un côté frontal extérieur axialement du moyeu (2, 4) est formée une cavité (30) annulaire qui s'étend autour de l'axe central (46) de telle sorte que le carter (6) présente un élément (34, 36) qui s'étend, d'un point situé radialement à l'extérieur de la denture d'accouplement (14, 18) au-delà des extrémités extérieures de la denture d'accouplement (14, 18), radialement vers l'intérieur et ensuite axialement dans la cavité (30) annulaire, en ce que la fente d'étanchéité (50) du joint d'étanchéité à fente est formée entre la partie de carter (34, 36) dépassant dans ladite fente et une section du moyeu (2, 4) située radialement à l'intérieur de cette partie de carter (34, 36) et en ce que l'agencement du canal collecteur de lubrifiant (38) est formé sur la surface périphérique extérieure de la partie de carter (34, 36) qui dépasse dans la cavité (30) annulaire, la surface périphérique extérieure étant opposée à la fente d'étanchéité (50) et orientée radialement vers l'extérieur.

8. Accouplement à dents articulé selon la revendication 7, caractérisé en ce qu'au moins l'une des deux surfaces d'étanchéité (28, 32) se faisant face à une certaine distance, du joint d'étanchéité à fente (26) sans contact, est en forme d'arc, dans le sens de la coupe longitudinale de l'accouplement.

9. Accouplement à dents articulé selon la revendication 8, caractérisé en ce que la surface d'étanchéité (28) fixe sur le moyeu est en forme d'arc dans le sens de la coupe longitudinale de l'accouplement et présente un point central de courbure qui se trouve dans ou près du point central de courbure (42) d'une courbure en forme d'arc de la tête de dent des dents d'accouplement (16) de la denture extérieure (14) fixe sur le moyeu.

10. Accouplement à dents articulé selon l'une quelconque des revendications précédentes, caractérisé en ce que la surface d'étanchéité (28) fixe sur le moyeu est formée par une surface du moyeu (2, 4) et en ce que la surface d'étanchéité (32) fixe sur le carter et qui lui est opposée à distance, est formée par une surface d'une partie (36) du carter (6).

11. Accouplement à dents articulé selon l'une quelconque des revendications précédentes, caractérisé en ce qu'il s'agit d'un accouplement à dents à double articulation qui comporte deux des moyeux (2, 4) cités qui sont disposés axialement l'un derrière l'autre et opposés l'un à l'autre de telle sorte que leurs surfaces extérieures frontales s'éloignent l'une de l'autre de façon opposée, la denture extérieure (14) de chaque moyeu (2, 4) étant en prise avec une denture intérieure (18) du carter (6).

12. Accouplement à dents articulé selon la revendication 11, caractérisé en ce que le carter (6) est muni, des deux côtés de chaque moyeu (2, 4), de butées (22, 24, 76, 78) auxquelles sont opposées des surfaces de butée (72, 74) des moyeux (2, 4) opposées l'une à l'autre axialement de telle sorte que l'espace de mouvement axial de chaque moyeu (2, 4) est relativement limité par rapport au carter (6) par les butées.

13. Accouplement à dents articulé selon la revendication 11 ou 12, caractérisé en ce que quelques unes au moins (22, 24) des butées (22, 24, 76, 78, 72, 74) présentent des éléments élastiques d'amortissement pour amortir le choc axial du moyeu (2, 4) sur le carter (6).

14. Accouplement à dents articulé selon l'une quelconque des revendications 11 à 13, caractérisé en ce que quelques unes au moins des butées (22, 24, 76, 78, 72, 74) sont disposées radialement, décalées vers l'extérieur suffisamment loin de l'axe central (46) de telle sorte qu'elles se trouvent à proximité ou à la même hauteur radiale que les dents d'accouplement (16, 20) des dentures d'accouplement (14, 18).
